# EUROPEAN PATENT APPLICATION

(11) **EP 4 556 884 A1**
(43) Date of publication of application: **21.05.2025**
(21) Application number: 23209700.6
(22) Date of filing: 14.11.2023
(51) Int. Cl.: G01N 1/42, G01B 11/06, H01J 37/20, G01B 9/02

(54) **ADVANCED SAMPLE THICKNESS MEASURING ARRANGEMENT AND METHOD FOR MEASURING A THICKNESS OF A SAMPLE AT CRYOGENIC TEMPERATURE BY INTERFEROMETRY USING A CRYOSTAT**

(71) Applicant: European Molecular Biology Laboratory, 69117 Heidelberg (DE)
(72) Inventor: PAPP, Gergely, 38100 Grenoble (FR)
(74) Representative: Qip Patentanwälte Dr. Kuehn & Partner mbB

(57) **Abstract**

A sample thickness measuring arrangement (1) including a cryostat (3) and method for measuring a thickness of a sample (49) are proposed. The cryostat comprises a coolant reservoir (17) for storing liquid coolant (29) and a sample observation unit (19) for observing characteristics of the sample. The sample observation unit comprises a tube (31) having tube walls (32) enclosing a tube volume including an observation volume (43), a thermal tube insulation layer (33) and a window arrangement (35). The tube is provided with a sealing arrangement (65) for tightly sealing a distal end (37) and/or a proximal end (39) of the tube such as to prevent gas circulation through the tube. The distal end of the tube is arranged within the coolant reservoir such as to make direct contact to the liquid coolant. The tube has two lateral openings (41) at opposing sides with regards to the observation volume.

## Description

### FIELD OF THE INVENTION

The present invention relates to a sample thickness measuring arrangement and to a method for measuring a thickness of a sample to be examined using e.g. cryo electron microscopy. Furthermore, the invention relates to a cryostat to be used in such arrangement or method.

### BACKGROUND OF THE INVENTION

Electron microscopy may be used to examine extremely small structures or particles for example in a nanometre range. In order to enable examining biological samples such as biological cells, cryo electron microscopy (CryoEM) has been developed. Cryo electron microscopy is a form of transmission electron microscopy (TEM), in which biological samples are examined at cryogenic temperatures of below -123 °C (150 K). In cryo electron microscopy, samples are generally quick-frozen and thereby vitrified before being inserted into a transmission electron microscope.

Typically, CryoEM data are obtained from sample particles embedded in a vitrified solution such as amorphous ice set on a CryoEM sample holder. Therein, the CryoEM sample holder may consist for example of a 3mm diameter 10 to 20 micrometre thickness metal grid made e.g. of copper, gold or another metal and being covered for example with a holey carbon film. The carbon film may have a thickness of for example about 10 nm and may include a matrix of micron-sized holes that holds a sample solution. The sample solution may typically comprise the samples to be examined and may further include water, salts and/or cryo-protectant. Upon sample preparation, the sample solution may be dispensed on a grid of a CryoEM sample holder, may then be blotted and may finally be vitrified by rapidly cooling it for example in liquid ethane. An optimal sample thickness may be around 100 nm, which may allow having in the holes of the CryoEM sample holder a single layer of sample particles embedded in the vitrified ice.

Conventional sample preparation techniques for CryoEM examination may involve a number of manual steps and may suffer from poor reproducibility. Particularly, it may be difficult to prepare and/or identify samples having a correct thickness to enable examining single particles or cells during CryoEM examination.

In order to overcome such difficulties, the applicant of the present application has developed a cryostat and a sample thickness measuring arrangement using such cryostat as well as a method for measuring a thickness of a sample using such cryostat. Details of such approach have been disclosed in the prior patent application WO 2020/058140 A1. Further Information about a technical background regarding CryoEM and its requirements as well as details about the prior approach including the cryostat and its application in the sample thickness measuring arrangement and method are given in the prior patent application.

The present application relates to a further development of such prior approach. It is to be noted that details disclosed with regards to embodiments of the prior approach may be applied or adopted to embodiments of the further development described in the present application. Accordingly, the entire content of the prior application shall be incorporated herein by reference.

### SUMMARY OF THE INVENTION AND OF EMBODIMENTS

There may be a need for an advanced sample thickness measuring arrangement and for a method for measuring a thickness of a sample, which may enable measuring a thickness of the sample with enhanced precision and/or enhanced reproducibility and/or which may thereby enable simple, reliable and/or cost effective sample preparation and/or quality control e.g. for application in CryoEM. Furthermore, there may be a need for a cryostat, which may be beneficially applied in such sample thickness measuring arrangement or method for measuring a thickness of a sample.

Those needs may be met with the subject-matter of the independent claims. Further exemplary embodiments may be derived from the dependent claims and the following description.

According to a first aspect of the present invention, a cryostat comprising a coolant reservoir for storing liquid coolant and a sample observation unit for observing characteristics of a sample is proposed. Therein, the coolant reservoir comprises a vessel enclosing a storage volume with walls of the vessel being thermally insulated with a thermal reservoir insulation layer such as to enable storing liquid coolant at temperatures below 150 K. The sample observation unit comprises a high thermal conductivity tube, a thermal tube insulation layer and a window arrangement. The tube has tube walls enclosing a tube volume including an observation volume. The tube is provided with a sealing arrangement for tightly sealing at least one of a distal end and a proximal end of the tube such as to prevent gas circulation through the tube. The tube walls comprise a highly thermally conductive material. The distal end of the tube is arranged within the storage volume of the coolant reservoir such as to make direct contact between the tube walls and liquid coolant stored in the coolant reservoir. The tube has two lateral openings in its tube walls at opposing sides with regards to the observation volume. At least portions of the tube walls are covered at their external side with the thermal tube insulation layer. The thermal tube insulation layer has two openings adjacent to the openings in the tube walls. The window arrangement comprises two opposing windows with panes, each pane being arranged at one of the openings in the thermal insulation layer. The panes are transparent to laser light.

According to a second aspect of the invention, a sample thickness measuring arrangement is proposed. The sample thickness measuring arrangement comprises a cryostat according to an embodiment of the first aspect of the invention and furthermore comprises a sample thickness measuring unit being arranged and configured for transmitting a laser beam through the window arrangement of the sample observation unit and for determining the sample thickness based on interferometry measurements with the transmitted laser beam.

According to a third aspect of the invention, a method for measuring a thickness of a sample is proposed. The method comprises at least the following steps, preferably in the indicated order: a cryostat according to an embodiment of the first aspect of the invention is provided. The sample is inserted into the observation volume of the sample observation unit using e.g. a gripper or tweezer. Therein, a low temperature coolant gas flow through the tube of the sample observation unit of the cryostat is prevented. Finally, the thickness of the sample is measured by transmitting a laser beam through the window arrangement of the sample observation unit and determining the sample thickness based on interferometry measurements with the transmitted laser beam.

Principles underlying embodiments of the present invention may be seen as being based, inter-alia, on the following ideas and observations, however without restricting the scope of the invention.

As already briefly indicated in the above introductory portion, precise sample preparation may be essential to obtain good CryoEM measurement results. Among various criteria that define a good sample grid, such criteria including, inter-alia, particle distribution, particle orientation, etc., a correct sample thickness may be a mandatory prerequisite.

It was therefore an aim leading to the prior approach as described in WO 2020/058140 A1 to further develop sample preparation for CryoEM purposes. Particularly, it was intended to develop a semi or fully automated CryoEM grid preparation machine and method that preferably may include sample quality control. Therein, it was an idea to use an existing high precision thickness measurement method and to further develop it such that it may beneficially be applied for measuring thicknesses of samples to be used in CryoEM. Specifically, it was an idea to use a sample thickness measuring unit which may determine a thickness of a sample based on interferometry measurements with a laser beam transmitted through the sample and to adapt it to the specific requirements encountered upon preparing samples to be used in CryoEM. Therein, the sample preparation process may include the interferometric measurement of the thickness of the sample during the preparation phase and after sample vitrification.

Particularly, it was a goal to control the quality of a sample grid in terms of ice thickness and to, optionally, provide information about a sample thickness distribution throughout the grid of a sample holder. Such information may be supplied to the microscope in order to rapidly access those parts of the grid which have optimal sample thickness. In principle, such final thickness measurement may also be used to control grids prepared manually, for quality control and/or to supply sample thickness maps to electron microscope.

However, it has been observed that, while optical thickness measurement techniques using interferometry measurements are in principle able to provide very high precision down to a nanometer range, these measurement techniques may be problematic when applied at cryogenic temperatures. Particularly, it has been found that even slight temperature fluctuations, temperature inhomogeneities and/or temperature gradients may significantly influence the accuracy of such optical thickness measurement techniques.

Consequently, first attempts to apply optical interferometry techniques for measuring CryoEM sample thicknesses where not successful. For example, measurement conditions where insufficiently stable upon the measured sample being cooled to cryogenic temperatures such that interference patterns could not be evaluated successfully.

In the applicant's prior approach disclosed in WO 2020/058140 A1, a specific cryostat was used upon measuring sample thicknesses with interferometry techniques at cryogenic temperatures. Therein, the cryostat comprised a coolant reservoir and a sample observation unit. Particularly, the coolant reservoir may serve for storing liquid coolant such as liquid nitrogen to be used for keeping the sample at cryogenic temperatures at about or below 150 K in the observation volume. The sample observation unit may be specifically adapted for observing characteristics of the sample, such observed characteristics possibly allowing deriving information about the thickness of the sample. For such purpose, the sample observation unit comprises a tube enclosing the observation volume and being thermally insulated by a thermal tube insulation layer. The tube as well as the insulation layer comprise lateral openings at opposing sides with regards to the observation volume such that a laser beam may be transmitted through the openings and through the intermittent observation volume. Using such laser beam, interferometry thickness measurements may be made for determining the thickness of the sample arranged in the observation volume. Furthermore, in order to prevent thermal losses or thermal disturbances through the openings, a window arrangement comprising opposing thick panes is provided, each pane being arranged such as to cover one of the openings in the thermal insulation layer.

Several characteristics of the coolant reservoir and the sample observation unit as described for the prior approach may also apply to the cryostat defined in the present application.

According to the prior approach, it was proposed that the tube in the sample observation unit shall be open both at its distal end as well as at its proximal end, as it was assumed that a gentle gas flow of cryogenic gas at very low temperatures should be established between the tube's distal end being arranged within the storage volume of the coolant reservoir and the tube's proximal end. Particularly, it was assumed that such gentle cryogenic gas flow may help keeping the sample arranged in the observation volume at cryogenic temperatures during the interferometry thickness measurements, as the observation volume is arranged between the tube's distal and proximal ends such that the cryogenic gas flows along the sample therein.

However, meanwhile, it has been observed that such cryogenic gas flow may induce some negative effects, For example, such cryogenic gas flow may at least slightly disturb or degrade the interferometry thickness measurements.

According to the further development described herein, it is therefore proposed to modify the cryostat by providing the tube with a specific sealing arrangement. Such sealing arrangement is configured for tightly sealing the tube's distal end and/or the tube's proximal end in order to thereby prevent any substantial gas circulation through the tube. Accordingly, with the sealing arrangement being established at least at one of the ends of the tube, any gas flow through the tube is prevented, thereby also preventing any disturbances induced by such gas flow.

Preferably, according to an embodiment, the sealing arrangement is arranged at or proximal to the proximal end of the tube and is thermally isolated from the tube. In other words, the sealing arrangement is provided at the tube's proximal end being further distant from the coolant reservoir in comparisons to the tubes distal end. At such proximal end, the sealing arrangement is generally easily accessible from outside the coolant reservoir and is not submitted to the very low cryogenic temperatures within the coolant reservoir. Furthermore, the sealing arrangement is not in direct contact with the tube but is spaced therefrom and is thermally isolated from the tube. Thereby, any influence of the sealing arrangement to thermal conditions at the tube are minimized. For example, a distance between the sealing arrangement and the tube may be at least a few millimeters, e.g. between 2 mm and 100 mm, preferably between 5 mm and 50 mm. A gap between the sealing arrangement and the tube may be filled with a thermally insulating material which may be same or similar to material of the thermal tube insulation layer.

Furthermore, according to the further development described herein, specific measures are established for suitably cooling the sample accommodated within the observation volume. Such measures include, inter-alia, providing walls of the tube with a highly thermally conductive material. Such highly thermally conductive material generally has a thermal conductivity being at least one or several orders of magnitude larger than a thermal conductivity of the material forming the thermal tube insulation layer. For example, according to an embodiment, the tube walls may be made with a metal such as preferably copper having superior thermal conductivity. Accordingly, thermal energy is conducted along the tube with low thermal resistance. As an additional measure, the distal end of the tube is arranged within the storage volume of the coolant reservoir such as to establish a direct contact between the tube walls and the liquid coolant stored in the coolant reservoir. Due to such direct contact, the distal end of the tube is cooled to cryogenic temperatures by the liquid coolant in a very efficient way. Furthermore, due to the superior thermal conductivity of the tube walls, the cryogenic temperatures are transmitted from the tube's distal end towards a portion of the tube enclosing the observation volume. As an overall result, the observation volume may be surrounded by tube walls being stably held at cryogenic temperatures and such cryogenic temperatures may be transferred to the sample accommodated within the observation volume. Accordingly, a thickness of such stably cooled sample may be reliably measured using interferometry thickness measurement techniques.

According to an embodiment, the cryostat further comprises a sample holder with a gripper being arranged and configured for gripping and holding a sample within the observation volume of the sample observation unit at a location within the tube between the opposing panes.

In other words, the cryostat may be provided with a sample holder which is configured for temporarily gripping the sample being originally be stored e.g. in or at the storage volume of the coolant reservoir, then displacing the sample holder together with the sample in order to arrange and hold the sample within the observation volume of the sample observation unit during interferometry thickness measurements, before finally releasing the sample again. Generally, such gripper activated between a closed gripping configuration in which it may grip a sample and an opened releasing configuration in which it may release the sample. For example, the gripper may be a tweezer or pincer.

Particularly, according to an embodiment, the gripper may be made with a metal.

Generally metals have a high thermal capacity. Accordingly, a gripper made with metal or, preferably, completely consisting of metal may have a high thermal inertia. Due to such high thermal inertia, the temperature of the gripper as well as of the sample held by the gripper may be very stable.

Furthermore, according to an embodiment, the gripper may be configured such as to mainly make thermal contact with the tube upon being inserted within the tube.

In other words, characteristics of the gripper such as its material, its geometry, its surface characteristics, etc. may preferably be set such that any exchange of thermal energy to and from the gripper is mainly established with regards to the tube and any further thermal energy exchanges with for example other components of the cryostat are of minor influence. Therein, the thermal energy exchanges between the tube and the gripper may be based on thermal conductance and/or thermal radiation exchange and/or thermal convection. Accordingly, due to such major thermal contact with the tube, the gripper together with the gripped sample are generally stably thermalized to the cryogenic temperatures of the tube.

Particularly, according to an embodiment, the gripper may be configured such as to make direct mechanical contact with the tube upon being inserted within the tube.

Expressed differently, a geometry of the gripper may be adapted to a geometry of the tube such that direct mechanical contact between the gripper and the tube at least along portions of a surface of the gripper is established upon the gripper being accommodated within the tube, particularly within the observation volume in the tube. Due to such direct mechanical contact, thermal energy may be directly and efficiently transmitted between the tube and the gripper due to thermal conductance. Thus, the gripper together with the gripped sample are generally stably thermalized to the cryogenic temperatures of the tube.

According to an embodiment, the sample holder further comprises a handling extension for handling and displacing the gripper within the tube. Therein, the handling extension extends through the sealing arrangement. Furthermore, at least a portion of the handling extension extending through the sealing arrangement is made with a thermally insulating material.

In other words, the gripper is provided with or attached to an additional component referred to herein as handling extension. Such handling extension may be an elongate component which, at its distal end, is fixed to the gripper such that, using the handling extension, the gripper may be handled and displaced within the tube.

Such handling extension is configured such that it extends through the sealing arrangement provided preferably close to the proximal end of the tube. Accordingly, the handling extension may extend, with a proximal portion thereof, in a volume outside the tube and proximal with regards to the sealing arrangement and, with a distal portion thereof, in a volume inside the tube and distal with regards to the sealing arrangement. An intermediate portion of the handling extension then extends through the sealing arrangement. Therein, the sealing arrangement as well as the intermediate portion of the handling extension are configured such that the sealing arrangements together with the handling extension may tightly seal the distal end of the tube such as to prevent any gas flow escaping from the tube and therefore also preventing any gas circulation through the tube. Preferably, the sealing arrangement and the handling extension are configured such that the handling extension may be displaced in a sliding up or down motion relative to the sealing arrangement.

Specifically, at least a portion of the handling extension extending through the sealing arrangement or, preferably, the entire handling extension shall be made with or consists of a thermally insulating material having a thermal conductivity being substantially lower, preferably being one or several orders of magnitude lower, than the thermal conductivity of the material of the gripper. Due to such low thermal conductivity, substantially no thermal energy is transferred via the handling extension to the gripper, thereby stabilising the gripper's temperature.

For example, according to an embodiment, at least a portion of the handling extension extending through the sealing arrangement or, preferably, the entire handling extension is made with or consists of a non-metal material such as preferably a plastic material.

Such non-metal or plastic material generally has a low thermal conductivity and/or a low thermal capacity and therefore supports preventing any thermal energy transfer from or via the handling extension to the gripper, thereby stabilising the gripper's temperature. Particularly, any heat transfer between for example a room-temperature environment surrounding the proximal portion of the handling extension outside the cryostat and a cryo-temperature environment surrounding the distal portion of the handling extension inside the cryostat may be limited. For example, the entire elongate handling extension or at least portions thereof may be made with epoxy.

According to an embodiment, the cryostat further comprises a chamber surrounding a portion of the handling extension positioned external to the tube.

For example, the chamber may comprise chamber walls enclosing the proximal portion of the handling extension protruding from the tube. The chamber walls may be laterally spaced apart from the handling extension such as to provide for thermal insulation. The chamber may avoid ambient air from entering into contact with the proximal portion of the handling extension in order to prevent, inter-alia, any condensation at the cool handling extension.

According to an embodiment, the cryostat further comprises a gas supply arrangement configured for supplying gas to a volume adjacent to the sealing arrangement.

Particularly, the gas supply arrangement may supply dry gas such as nitrogen (N2) for example to the chamber surrounding the proximal portion of the handling extension just above the sealing arrangement. Thereby, condensation and/or freezing may be avoided. Furthermore, it may be prevented that ambient air may reach the sealing arrangement or even enters the tube.

According to an embodiment, the cryostat further comprises a door arrangement for selectively opening and closing an access to the distal end of the tube.

The door arrangement may be displaced between a closed configuration, in which it tightly covers and closes the distal end of the tube, and an opened configuration, in which it leaves the distal end of the tube open and accessible. Such door arrangement may for example serve as a trapdoor at the distal end of the tube which may selectively limit any gas flow from entering the tube and/or circulating throughout the tube. Accordingly, when being in its closed configuration, the door arrangement may support establishing a stable temperature within the tube, particularly within the observation volume accommodating the sample. In its open configuration, the door arrangement may allow introducing and releasing samples to and from the tube through the distal end of the tube.

Embodiments of the sample thickness measuring arrangement and the method for measuring a thickness of a sample in accordance with the second and third aspect of the invention will be described further below with reference to the figures.

Finally, it should be noted that possible features and advantages of embodiments of the present invention are described herein in connection partly with respect to a cryostat, partly with respect to a sample thickness measuring arrangement and partly with respect to a method for measuring a thickness of a sample. One skilled in the art will realize that features described for one type of embodiments may be adapted, transferred, replaced and/or combined with other features described for the same type or another type of embodiments, in order to come to further embodiments of the present invention.

### BRIEF DESCRIPTION OF THE DRAWINGS

Exemplary embodiments of the invention will be described in the following with reference to the attached drawing. Neither the drawing nor the specification shall limit the scope of the inventions and its embodiments.
- Fig. 1: shows a simplified visualization of a sample thickness measuring arrangement with a cryostat according to a prior approach.
- Fig. 2: shows a perspective view of a sample thickness measuring arrangement with a cryostat according to an embodiment of the invention.
- Fig. 3: shows a cross-sectional view of the sample thickness measuring arrangement of Fig. 2 taken in an x-z-plane.
- Fig. 4: shows an enlarged cross-sectional view of a cut-out portion "A" indicated in Fig. 3.
- Fig. 5: shows an enlarged cross-sectional view of a cut-out portion "B" indicated in Fig. 3 taken in a y-z-plane.

The drawings are only schematic and not to scale. Same or similar elements are referenced with same reference signs throughout the drawings.

### DETAILED DESCRIPTION OF EMBODIMENTS

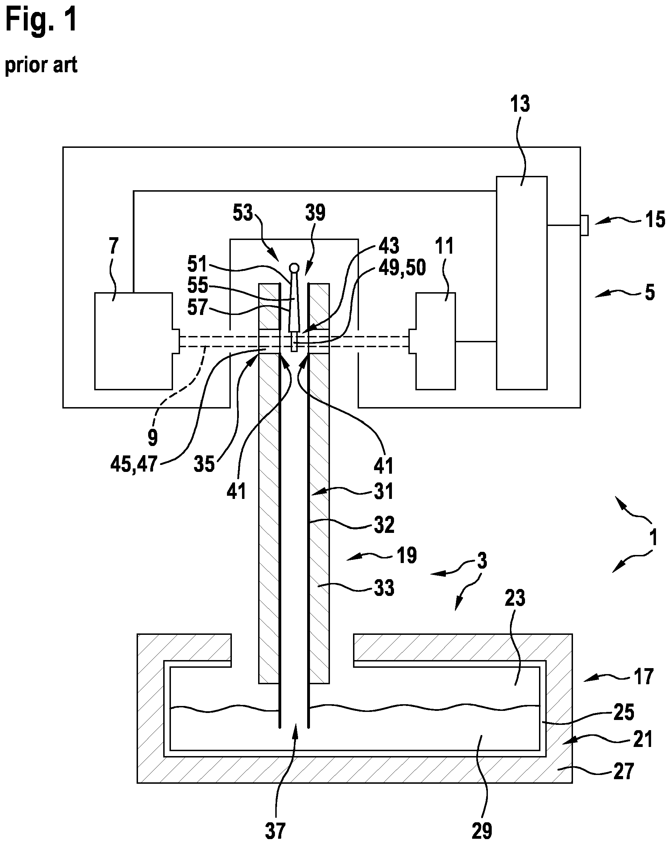

First, some characteristics of a sample thickness measuring arrangement 1 as described in the applicant's prior approach disclosed in WO 2020/058140 A1 will be described with reference to Fig. 1, in order to then better understand modifications implemented in the further developed cryostat described in the present application.

Fig. 1 shows a sample thickness measuring arrangement 1 including a cryostat 3. Additionally to the cryostat 3, the sample thickness measuring arrangement 1 comprises a sample thickness measuring unit 5.

The sample thickness measuring unit 5 is configured for generating a laser beam 9 to be transmitted through a transparent sample 49 and for measuring phase shifts in the laser beam 9 after transmission through the sample 49, in order to thereby derive information about the thickness of the sample 49.

Such sample thickness measuring unit 5 could be a commercial digital holographic microscope (DHM). Digital holographic microscopy is a kind of digital holography applied to microscopy. Digital holographic microscopy distinguishes itself from other microscopy methods by not recording a projected image of the object but, instead, digitally recording the light wave front information originating from the object as a hologram. From such hologram, a computer may calculate the object image by using a numerical reconstruction algorithm. Other closely related microscopy methods to digital holographic microscopy are interferometric microscopy, optical coherence tomography and diffraction phase microscopy. Common to all those methods is a use of a reference wave front to obtain amplitude and phase information. The information is recorded on a digital image sensor or by a photodetector from which an image of the object may be created or reconstructed by a computer. In contrast hereto, in traditional microscopy, no reference wave front is used but only intensity information is recorded and essential information about the object is generally lost.

In DHM, it is generally necessary to create interference patterns, i.e. a hologram. Accordingly, the illumination used in DHM needs to be coherent. Thus, a laser beam is generally applied as an illumination source. The laser beam is typically split into an object beam and a reference beam. The expanded object beam illuminates the sample to create the object wave front. After the object wave front is collected by a microscope objective, the object and reference wave fronts are joined e.g. by a beam splitter to interfere and create the hologram. Using the digitally recorded hologram, a computer may act as a digital lens and calculate a viewable image of the object wave front by using a numerical reconstruction algorithm. Accordingly, DHM may be used to provide a 2-dimensional image of the transparent object comprising, inter alia, information about the local thicknesses of the object. Optionally, the DHM may additionally comprise an objective including a lens such that the grid may be directly imaged.

The sample thickness measuring unit 5 comprised in the sample thickness measuring arrangement 1 is only visualized very schematically. It comprises a laser 7 emitting the laser beam 9 and a light detector 11. The laser beam 9 has a relatively broad beam width and the light detector 11 comprises several detector pixels such as to generate 2-dimensional information regarding an amplitude and phase of detected laser light. The laser 7 as well as the light detector 11 are connected to a computing unit 13 which may generate 2-dimensional images or maps based on the information received by the light detector 11, such images or maps representing local widths at various locations throughout the sample 49. Such images or maps may be output at an output interface 15. Accordingly, the images or maps may be transmitted to other devices such as, for example, a CryoEM or a control computer of a sample preparation machine.

Generally, good CryoEM data may only be obtained from particles embedded in a vitrified solution, i.e. in amorphous ice. Once vitrified, the samples should remain under 150 K, i.e. the temperature where vitrified ice transforms to hexagonal, cubic or crystalline ice. For practical reasons, the prepared sample grids are typically stored in liquid nitrogen at 77.36 K. Thickness measurements should then be operated in cryogenic conditions.

However, this has shown to be a major challenge. For example, digital holographic methods used in commercial devices for precisely measuring thicknesses of transparent samples are generally extremely sensitive to air movements and temperature gradients. This difficulty is amplified at cryogenic temperatures, where the measurement light path presents large temperature gradients that are difficult to stabilize.

In order to overcome such difficulty, a special cryostat 3 has been developed. The cryostat 3 comprises a coolant reservoir 17 and a sample observation unit 19.

The coolant reservoir 17 comprises a vessel 21 enclosing a storage volume 23. Therein, walls 25 of the vessel 23 are thermally insulated with a thermal reservoir insulation layer 27. Due to such insulation, liquid coolant 29 may be stored within the coolant reservoir 17 at cryogenic temperatures below 150 K.

The sample observation unit 19 comprises a tube 31, a thermal tube insulation layer 33 and a window arrangement 35.

The tube 31 comprises tube walls 32. According to the prior approach, the tube 31 is open both at its distal end 37 and at its proximal end 39. The distal end 37 of the tube 31 is arranged within the storage volume 23 of the coolant reservoir 17 such that portions of the liquid coolant 29 may enter the inside of the tube 31 and/or thermally contact the distal end 37 of the tube 31. Accordingly, liquid coolant 29 may cool the tube 31 and may partially evaporate such as to establish a gentle flow of low-temperature coolant gas through the tube 31. Preferably, the tube 31 is made of a metal such as copper having a high thermal conductivity. An external side of the tube 31 is covered with the thermal tube insulation layer 33 such as to minimize any thermal losses. Accordingly, thermal losses, thermal fluctuations and/or thermal gradients throughout the tube 31 may be minimized.

Close to its proximal end 39, the tube 31 comprises two lateral openings 41. The lateral openings 41 are arranged at opposite sides of the tube 31 and enclose an observation volume 43 in between. Adjacent to the openings 41 in the tube 31, openings 45 are also provided within the thermal tube insulation layer 33. The window arrangement 35 comprises two thick panes 47 of glass or plexiglass. These panes 47 have a geometry complementary to the openings 45 in the thermal tube insulation layer 33 and therefore fill and thermally isolate these openings 45 in the region of the window arrangement 35.

In order to prepare for example biological samples 49 for CryoEM analysis, a solution comprising the samples 49 is dispensed on a grid 50 and is then vitrified e.g. in liquid ethane. The grid 50 with the vitrified samples 49 is then introduced into the observation volume 43 in the tube 31 of the cryostat 3.

Being held in the low-temperature coolant gas flow flowing through the tube 31, digital holographic microscope measurements may be performed for obtaining 2-dimensional information of thicknesses of the samples 49.

A critical point observed in the applicant's prior approach may be the technique used to hold the samples 49 or, more precisely, the grid 50 with these samples 49, and to introduce it into the observation volume 43 in the tube 31. In order to obtain a perturbation-free measuring environment, a sample holder 53 comprises tweezers 51 for holding and, optionally, displacing the grid 50 with the samples 49. Even though such tweezers 51 may have thin tips, it was observed in the prior approach that metallic tweezers 51 may drive enough heat to the samples 49 to modify a density of the coolant gas flow around the grid 50 and to, thereby, alter the thickness measurements. Accordingly, in the prior approach, measures where realized for minimizing thermal influences created by the sample holder 53. For such purpose, tweezers 51 made with plastics (e.g. glass loaded PEEK) have been used for holding the grid 50 with the samples 49. Optionally, such tweezers 51 may have a stabilizing core 55 being mechanically stable. For example, such core 55 may be made from glass. A surface of this core 55 may be covered with an outer sheath 57 of plastics. With such arrangement, heat transfer could be minimized and consequently does not perturb the laminar coolant gas flow through the observation volume 43.

With the described prior approach, the creation of a thickness map of the grid 50 comprising the samples 49 with acceptable noise was possible. In fact, using the sample observation unit 19 of the cryostat 3 and coupling such sample observation unit 19 to the sample thickness measuring unit 5 comprising a commercial digital holographic microscope, it was shown to be possible to measure the thickness of a vitrified sample 49 on a CryoEM grid 50 with a precision of a few nanometers and to produce a sample thickness map over a whole grid 50.

Such thickness map could be used to reject grids 50 with inadequate sample thickness and/or to directly access areas of optimal sample thicknesses during CryoEM analysis. Consequently, the proposed system could make CryoEM pipelines, comprising sample preparation, followed by screening and then followed by data collection, more efficient and CryoEM platforms more productive.

The proposed approach could be realized as a stand-alone machine to control the quality of already prepared sample grids. Alternatively, a flexible inspection unit could be provided that could be adapted to existing in-line sample preparation machines.

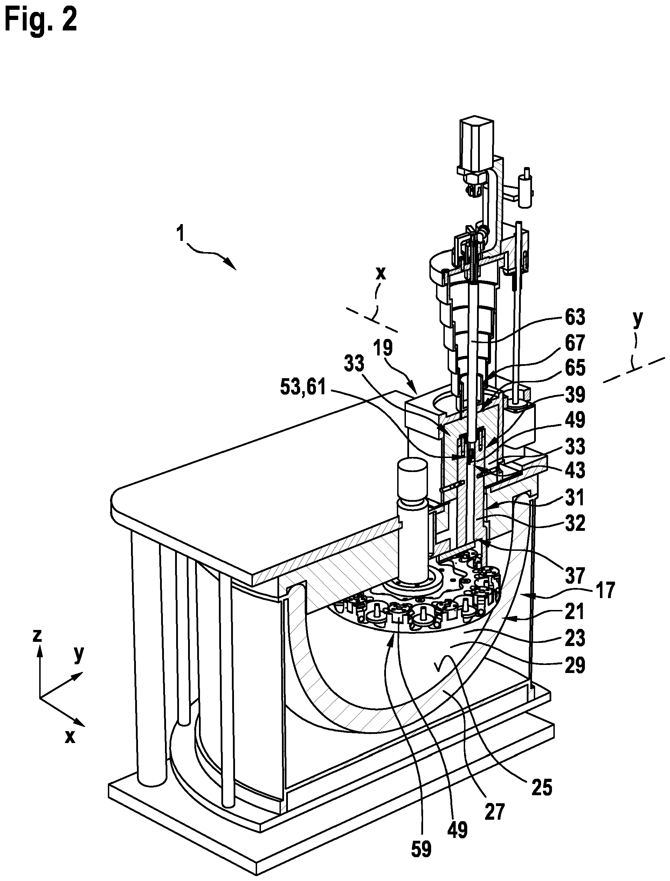

Next, embodiments of a sample thickness measuring arrangement 1 and its cryostat 3 as well as of the method for measuring a thickness of a sample using such arrangement 1 according to the present invention will be described. Therein, many features and characteristics of such embodiments of the present invention may be same or similar to those described in the preceding paragraphs with respect to the applicant's prior approach. However, some significant differences and modifications of the cryostat 3 according to the present invention in comparison to the prior approach will be explained in the next paragraphs with reference to Figs. 2 - 5.

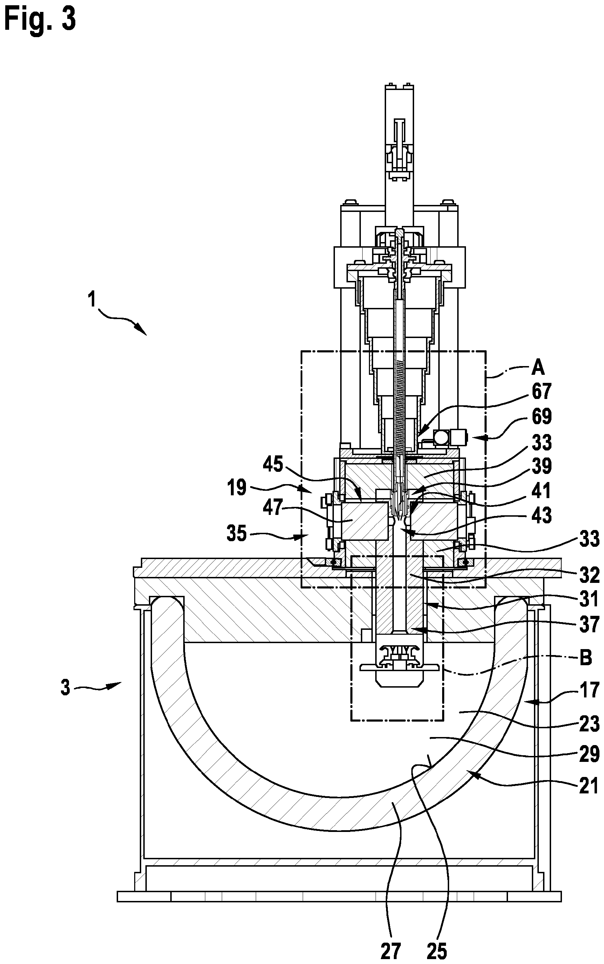

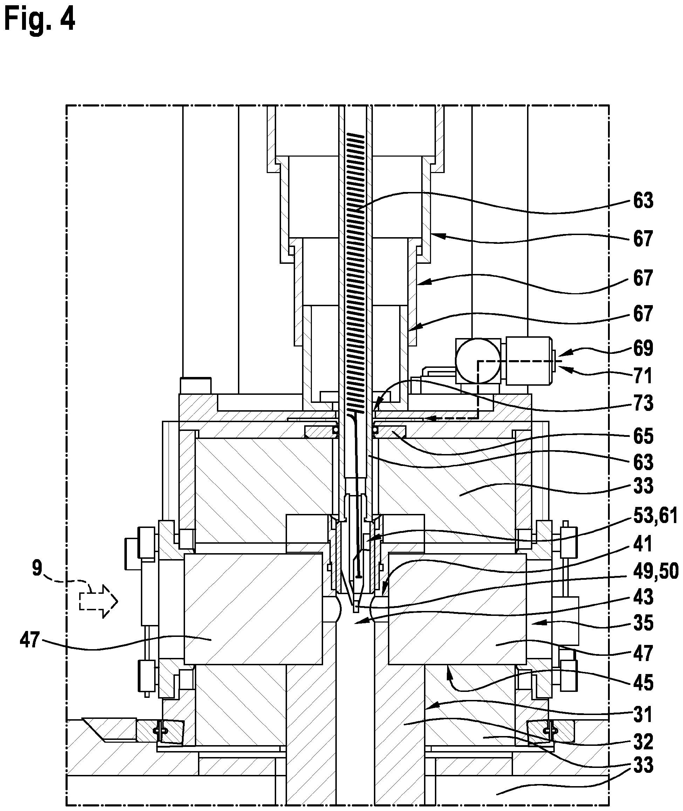

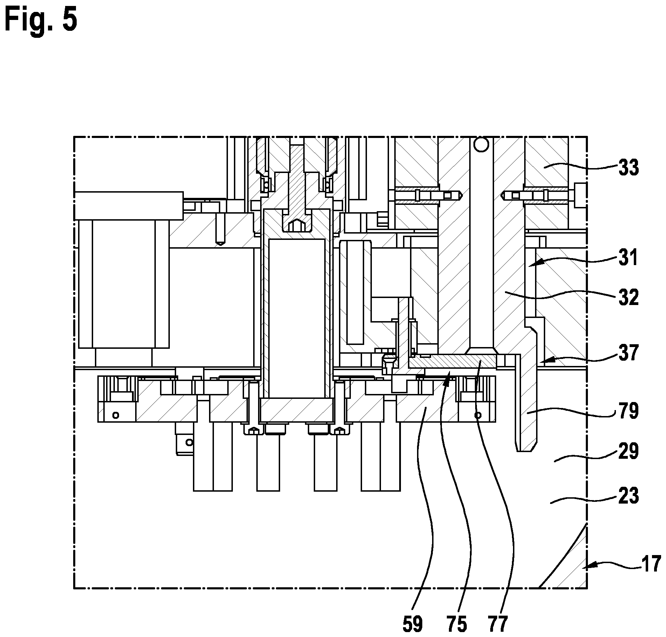

Fig. 2 shows a sample thickness measuring arrangement 1 with a cryostat 3 including a coolant reservoir 17 storing liquid coolant 29 at cryogenic temperatures and a sample observation unit 19 for observing characteristics of a sample 49. Fig. 3 shows a cross-sectional view of the sample thickness measuring arrangement 1 along a cutting plane "X" in an x-z-direction as indicated in Fig. 2. Fig. 4 visualizes an enlarged portion indicated with "A" in Fig. 3. Fig. 5 visualizes another enlarged portion indicated with "B" in Fig. 3, however taken in a cutting plane "Y" in a y-z-direction as indicated in Fig. 2.

Therein, the coolant reservoir 17 comprises a vessel 21 enclosing a storage volume 23. Walls 25 of the vessel 21 are thermally insulated by a thermal reservoir insulation layer 27. A plurality of samples 49 is arranged on a carousel 59 which is accommodated within the coolant reservoir 17 in order to keep the samples 49 at cryogenic temperatures below 150 K.

The sample observation unit 19 comprises a tube 31 having tube walls 32. The tube walls 32 enclose an inner tube volume. In an upper portion of the tube 31, such tube volume includes an observation volume 43 in which the sample 49 is to be accommodated in order to conduct thickness measurements thereof. A thermal tube insulation layer 33 made with a thermally insulating material such as a foam covers and thermally insulates an outer circumference of the tube 31.

The tube 31 has lateral openings 41 in its tube walls 32 at opposing sides with regards to the observation volume 43. Furthermore, the thermal tube insulation layer 33 comprises corresponding openings 45 adjacent to these openings 41 in the tube walls 32. Therein, a window arrangement 35 is formed and includes two opposing panes 47 arranged in the openings 45 in the thermal insulation layer 33. These panes 47 are optically transparent such that light of a laser beam 9 may be transmitted through the panes 47, through the openings 41 in the tube walls 32 and finally through the observation volume 43 with the sample 49 arranged therein.

As one major modification in the cryostat 3 of the present invention as compared to the prior approach, the tube 31 is no more open at its proximal end 39 and at its distal end 37 and no more gas flow is allowed through the tube 31. To the contrary, any substantial gas flow or gas circulation through the tube 31 is blocked by closing and sealing the tube 31 at least at one of its ends 37, 39. For such purpose, the tube 31 is provided with a sealing arrangement 65. In the example shown in the figures, such sealing arrangement 65 is arranged proximal to and spaced from the proximal end 39 of the tube 31. Furthermore, the sealing arrangement 65 is thermally isolated from the tube 31 due to a portion of the thermal tube insulation layer 33 being arranged between both components. The sealing arrangement 65 is configured such as to tightly seal a gas communication channel at the proximal end 39 of the tube 31 such that no substantial gas flow may be established along the inner volume of the tube 31. Due to blocking such gas flow, the sample 49 arranged in the observation volume 43 is not affected by any gas flow and may therefore be held in a thermally and/or mechanically stable condition.

In order to further stably cool the sample 49 in the observation volume 43, the tube walls 32 are made with a thermally highly conductive metal such as copper. Furthermore, the distal end 37 of the tube 31 is arranged within the storage volume 23 of the coolant reservoir 17 such as to establish a direct contact between the metallic tube walls 32 and the liquid coolant 29 in the coolant reservoir 17. For such purpose, the tube walls 32 are provided at the tube's distal end 37 with an elongate protrusion forming a plunger 79 which may dip directly into the liquid coolant 29. Due to such direct contact with the liquid coolant 29 and the superior thermal conductivity of the tube walls 32, stable thermal conditions at cryogenic temperatures may be established throughout the tube 31 and its inner volume including the observation volume 43.

The cryostat further comprises a sample holder 53 including a gripper 61. Such gripper 61 may selectively grip and release a sample 49. Furthermore, the gripper 61 is connected with a handling extension 63 for handling and displacing the gripper 61 within the tube 31. Accordingly, using the sample holder 53, the gripper 61 may be displaced with the handling extension 63 such as to protrude from the distal end 37 of the tube 31 for gripping one of the samples 49 arranged on the carousel 59 and to then displace the gripper 61 together with the sample 49 along the inner volume of the tube 31 until arriving at the observation volume 43. The gripper 61 may then hold the sample 49 stably while the thickness of the sample 49 is measured. Subsequently, the gripper 61 may be displaced again towards the carousel 59 and release the sample 49.

Particularly, the entire gripper 61 or at least a lower part of the gripper 61 coming into direct contact with the sample 49 is made with metal having a high thermal capacity. Accordingly, thermal inertia of the gripper 61 helps keeping the sample 49 at stable thermal conditions while measuring its thickness.

Furthermore, the gripper 61 is preferably configured such that its temperature is mainly influenced due to a thermal contact with the tube 31 and other thermal influences are negligible. For such purpose, the geometry of the gripper 61 may be adapted such that direct mechanical contact with the tube 31 is established upon the gripper 61 being inserted within the tube 31 at least along partial surface areas of the gripper 61. Nevertheless, there should be sufficient lateral play between the outer circumference of the gripper 61 and the inner circumference of the tube 31 in order to allow smooth displacement of the gripper 61 longitudinally along the tube 31. Additionally or alternatively to a direct mechanical contact with the tube 31, the gripper 61 may be configured for establishing intense thermal radiation exchange with the tube 31.

The handling extension 63 has a rod-like elongate form and extends from its lower end connected to the gripper 61 and being arranged within the tube 31 to its upper end being arranged outside the tube 31 and preferably being accessible from outside the cryostat 3. Accordingly, the handling extension 63 may be used by a displacing mechanism arranged outside the cryostat 3 for displacing the gripper 61 throughout the tube 31 inside the cryostat 3 and/or for selectively activating a gripping action or a releasing action of the gripper 61.

Therein, the handling extension 63 extends through the sealing arrangement 65. For example, the sealing arrangement 65 may comprise a sealing ring enclosing the handling extension 63 such as to form a sliding seal. The handling extension 63 may then be displaced longitudinally relative to the sealing arrangement 65 while the sliding seal slides along a circumferential surface of the handling extension 63 and hermetically separates a volume distal from the sealing arrangement 65 from a volume proximal from the sealing arrangement 65.

Preferably, the handling extension 63 is made with a non-metal material such as plastics. For example, the handling extension 63 may be made with epoxy. Due to the generally very low thermal conductivity of such plastic materials, any heat transfer along the handling extension 63 may be limited. Accordingly, the handling extension 33 helps thermally insulating the gripper 61 and its gripped sample 49 being at cryogenic temperatures from an environment being for example at room-temperature.

In order to further minimize any thermal influences from an ambience and, particularly, to avoid ambient air from entering into contact with an upper part of the handling extension 63 and/or the gripper 61, the cryostat 3 is provided with a chamber 67 surrounding a portion of the handling extension 63 positioned external to the tube 31.

Furthermore, a gas supply arrangement 69 is provided at the cryostat 3. The gas supply arrangement 69 includes a gas inlet 71 accessible from outside the cryostat 3 and a gas outlet 73 arranged close to the sealing arrangement 65. Accordingly, the gas supply arrangement 69 may supply gas to a volume adjacent to the sealing arrangement 65. Thereby, dry gas such as nitrogen gas may be blown along the sealing arrangement 65 in order to thereby avoid any condensation and/or freezing of the gripper 61 and/or of the handling extension 63. Furthermore, by introducing nitrogen gas from the gas outlet 73 within a chamber just above the sealing arrangement 65, ambient air may be prevented from entering the tube 31.

As an additional measure for stabilising the temperature within the tube 31 and thereby stabilising the temperature of the sample 49 in the observation volume 43, the cryostat 3 further comprises a door arrangement 75 for selectively opening and closing an access to the distal end 37 of the tube 31. As shown for example in Fig. 5, such door arrangement 75 may comprise a door cover plate 77 which may be displaced between an open configuration in which the distal end 37 of the tube 31 remains open and a closed configuration in which the door cover plate 77 covers the distal end 37 of the tube 31. Therein, in the closed configuration, the door arrangement 75 prevents any cryogenic gas from entering the tube 31 and therefore helps avoiding any gas flow throughout the tube 31.

Finally, the term "comprising" does not exclude other elements or steps, and the indefinite article "a" or "an" does not exclude a plurality. The mere fact that certain measures are re-cited in mutually different dependent claims does not indicate that a combination of these measures cannot be used to advantage. Any reference signs in the claims should not be construed as limiting the scope.

### LIST OF REFERENCE SIGNS

- 1: sample thickness measuring arrangement
- 3: cryostat
- 5: sample thickness measuring unit
- 7: laser
- 9: laser beam
- 11: light detector
- 13: computing unit
- 15: output interface
- 17: coolant reservoir
- 19: sample observation unit
- 21: vessel
- 23: storage volume
- 25: walls
- 27: thermal reservoir insulation layer
- 29: liquid coolant
- 31: tube
- 32: tube walls
- 33: thermal tube insulation layer
- 35: window arrangement
- 37: distal end
- 39: proximal end
- 41: openings in the tube
- 43: observation volume
- 45: openings in the thermal tube insulation layer
- 47: panes
- 49: samples
- 50: grid
- 51: tweezers
- 53: sample holder
- 55: core
- 57: outer sheath
- 59: carousel
- 61: gripper
- 63: handling extension
- 65: sealing arrangement
- 67: chamber
- 69: gas supply arrangement
- 71: gas inlet
- 73: gas outlet
- 75: door arrangement
- 77: door cover plate
- 79: plunger

## Claims

1. Cryostat (3) comprising:
a coolant reservoir (17) for storing liquid coolant (29); and
a sample observation unit (19) for observing characteristics of a sample (49);
wherein the coolant reservoir (17) comprises a vessel (21) enclosing a storage volume (23) with walls (25) of the vessel (21) being thermally insulated with a thermal reservoir insulation layer (27) such as to enable storing liquid coolant at temperatures below 150 K;
wherein the sample observation unit (19) comprises:
a tube (31) having tube walls (32) enclosing a tube volume including an observation volume (43);
a thermal tube insulation layer (33); and
a window arrangement (35);
wherein the tube (31) is provided with a sealing arrangement (65) for tightly sealing at least one of a distal end (37) and a proximal end (39) of the tube (31) such as to prevent gas circulation through the tube (31);
wherein the tube walls (32) comprise a highly thermally conductive material;
wherein the distal end (37) of the tube (31) is arranged within the storage volume (23) of the coolant reservoir (17) such as to make direct contact between the tube walls (32) and liquid coolant (29) stored in the coolant reservoir (17);
wherein the tube (31) has two lateral openings (41) in its tube walls (32) at opposing sides with regards to the observation volume (43);
wherein at least portions of the tube walls (32) are covered at their external side with the thermal tube insulation layer (33);
wherein the thermal tube insulation layer (33) has two openings (45) adjacent to the openings (41) in the tube walls (32), and
wherein the window arrangement (35) comprises two opposing panes (47), each pane (47) being arranged at one of the openings (45) in the thermal insulation layer (33), the panes (47) being transparent to light of a laser beam (9).

2. Cryostat according to claim 1, wherein the sealing arrangement (65) is arranged at or proximal to the proximal end (39) of the tube (31) and is thermally isolated from the tube (31).

3. Cryostat according to one of the preceding claims, wherein the tube walls (32) are made with metal, preferably copper.

4. Cryostat according to one of the preceding claims, further comprising a sample holder (53) with a gripper (61) being arranged and configured for gripping and holding a sample (49) within the observation volume (43) of the sample observation unit (19) at a location within the tube (31) between the opposing panes (47).

5. Cryostat according to claim 4, wherein the gripper (61) is made with metal.

6. Cryostat according to one of claims 4 and 5, wherein the gripper (61) is configured such as to mainly make thermal contact with the tube (31) upon being inserted within the tube (31).

7. Cryostat according to one of claims 4 to 6, wherein the gripper (61) is configured such as to make direct mechanical contact with the tube (31) upon being inserted within the tube (31).

8. Cryostat according to one of claims 4 to 7, wherein the sample holder (53) further comprises a handling extension (63) for handling and displacing the gripper (61) within the tube (31),
wherein the handling extension (63) extends through the sealing arrangement (65),
wherein at least a portion of the handling extension (63) extending through the sealing arrangement (65) is made with a thermally insulating material.

9. Cryostat according to claim 8, wherein the portion of the handling extension (63) extending through the sealing arrangement (65) is made with a non-metal material, preferably a plastic material.

10. Cryostat according to one of claims 8 and 9, further comprising a chamber (67) surrounding a portion of the handling extension (63) positioned external to the tube (31).

11. Cryostat according to one of the preceding claims, further comprising a gas supply arrangement (69) configured for supplying gas to a volume adjacent to the sealing arrangement (65).

12. Cryostat according to one of the preceding claims, further comprising a door arrangement (75) for selectively opening and closing an access to the distal end (37) of the tube (31).

13. Sample thickness measuring arrangement (1) comprising:
a cryostat (3) according to one of claims 1 to 12;
a sample thickness measuring unit (5) being arranged and configured for transmitting a laser beam (9) through the window arrangement (35) of the sample observation unit (19) of the cryostat (3) and for determining the thickness of a sample (49) based on interferometry measurements with the transmitted laser beam (9).

14. Method for measuring a thickness of a sample (49), the method comprising:
providing a cryostat (3) according to one of claims 1 to 12;
inserting the sample (49) into the observation volume (43) of the sample observation unit (19);
preventing a low temperature coolant gas flow through the tube (31) of the sample observation unit (19) of the cryostat (3); and
measuring the thickness of the sample (49) by transmitting a laser beam (9) through the window arrangement (35) of the sample observation unit (19) and determining the sample thickness based on interferometry measurements with the transmitted laser beam (9).
